# EUROPEAN PATENT SPECIFICATION

(11) **EP 3 315 683 B1**
(45) Date of publication and mention of the grant of the patent: **16.06.2021**
(21) Application number: 17197298.7
(22) Date of filing: 19.10.2017
(51) Int. Cl.: E04C 2/292, E04B 1/94, E04B 2/74, F16B 5/00, E04B 1/14

(54) **RESILIENT FITTING METAL PLATE AND BRACKET FOR THE CONNECTION OF SANDWICH PANELS AND FIREPROOF WALL WITH THE RESILIENT FITTING METAL PLATE AND BRACKET**
DEHNBARE METALLPLATTE UND KLAMMER FÜR DIE VERBINDUNG VON SANDWICHPANEELEN UND FEUERBESTÄNDIGE WAND MIT DIESER DEHNBAREN METALLPLATTE UND KLAMMER
RACCORD ÉLASTIQUE EN MÉTAL ET CLIP DESTINÉ POUR LA CONNEXION DE PANNEAU SANDWICH ET MUR IGNIFUGE AVEC CE RACCORD ÉLASTIQUE EN MÉTAL ET CLIP

(30) Priority: 26.10.2016 SE 1651399
(43) Date of publication of application: 02.05.2018
(73) Proprietor: Lindab AB, 269 82 Bastad (SE)
(72) Inventor: MÄKI, Jan-Christer, 976 31 LULEÅ (SE)
(74) Representative: Zacco Sweden AB

(56) References cited:
- FR-A1- 2 461 069
- US-A- 2 181 074
- US-A- 2 270 218
- US-A- 3 886 704
- US-A- 5 628 159

## Description

### TECHNICAL FIELD

The present invention relates to a resilient fitting metal plate and a bracket for sandwich panels and a system of at least two such resilient fiiting metal plates and sandwich panels making up a fireproof wall. The fitting is a metal plate adapted to be attached to sandwich panels and/or any supporting element of the fireproof wall and to overlappingly cover the thereby formed joint between associated sandwich panels and/or any supporting element of the fireproof wall in the associated joint.

### BACKGROUND ART

Sandwich elements in the form of panels are used in the construction industry for making walls and roofs. Each sandwich panel comprises an external metal plate and an internal metal plate with intermediate isolation material arranged between the plates. Industrial buildings typically comprise a body of pillars and laying sandwich elements/panels extending between the pillars and stacked on top of each other to form isolating walls, in this case, working as a fire barrier. The sandwich panels are often adjoined at their edges forming horizontal and/or vertical joints. These joints comprises adjoining ends of sandwich panels, which ends may abut each other or against one or more structural/supporting elements and/or have one or more structural/supporting elements therebetween, such as supporting pillars or the like. Prior art sandwich panel walls normally cover those pillars by gypsum boards to protect them from excessive heat during fire. During fires, sandwich panel walls are subjected to a phenomenon occuring as the fire/heat exposed plate on one side of the isolation material/sandwich panel, commonly the internal side/plate of the sandwich panel, is subjected to thermal expansion due to excessive heating, while the metal plate on the other side of the isolation material, i.e. sandwich panel, usually the external side/plate of the sandwich panel, is subjected to less heat and thereby less expansion/thermal stress.

An example of siding units comprising outer panels and backing boards is disclosed in US 3 886 704, where the outer panels form cavities over backing boards and joints between interconnected backing boards.

A further issue with prior art sandwich panel systems is their ability to withstand so-called shock impacts during fires. Such an impact occurs when a part of a building impacts a sandwich panel wall with one or more falling structural elements during the fire. The shock effect arises as the sandwich panels of the wall being hit by the impact is somewhat weakened, i.e. at least some of its sandwich panels are weakened, due to the exposure to excessive heat on that side, whereby the risk of crumpling and buckling and/or collapsing of the wall increases, wherefore, even more damage to the building potentially sets in. Prior art sandwich panel walls are made up of complicated structures and several layers of sandwich panels to increase their ability to withstand fire and/or excessive heat and shock impacts making known sandwich panel walls cumbersome to install and expensive.

### SUMMARY OF THE INVENTION

On this background, it is an object of the present invention to provide a resilient fitting metal plate and a bracket for sandwich panels making up a fire proof wall and a system comprising at least two or more such resilient fitting metal plates and a bracket, which solves or at least mitigates the problems above.

An object of the present disclosure is achieved by providing a resilient fitting metal plate and a bracket and a system made up of at least two or more such resilient fitting metal plates and a bracket whereby each resilient fitting metal plate is configured to expand from an original shape into another shape and contract, i.e. to spring back to its original shape. This shape-change ability of the resilient fitting metal plate enables it to flexible but sturdy respond to a dynamic impact load or shock incurred on a sandwich panel which the resilient fitting metal plate is holding in place. Hence, the resilient fitting metal plate is able to expand when the sandwich panel is hit and bent/buckled, and to contract when the dynamic impact load abates or disappears. The resilient fitting metal plate prevents each deformed sandwich panel from coming loose from the wall by holding on to the panel. This is done by distributing the energy of the impact load over a prolonged period of time so that overloading of fastening of any sandwich panel is prevented, including the holding on by the resilient fitting metal plate. The shape-change of the resilient fitting metal plate enables it to sturdy hold on to/keep each sandwich panel in place on the wall by being able to "follow"/adapt to the movements and/or dimension change/buckling of each sandwich panel when hit, and contract/"pull/hold back/on" each panel after the hit so that it does not come loose from the wall. Fastening means used to make up the fireproof wall by assembly of sandwich panels or to join individual sandwich panels to each other are thus prevented from breaking. Fastening means used to attach sandwich panels to supporting/structural elements are thus prevented from breaking.

According to one object of the invention, a resilient fitting metal plate and a bracket and a system made up of at least two or more such resilient fitting metal plates and a bracket are provided, each resilient fitting metal plate having a shape that creates an inherent resilience of the fitting metal plate. The resilient fitting metal plate is inherently resilient, while at the same time sturdy enough to follow and firmly hold, i.e. hold back, and keep in place any shape-changing sandwich panel when hit, such that each sandwich panel and wall is able to withstand an impact load without breaking or collapsing.

Another object of the invention resides in a resilient fitting metal plate and a bracket and a system made up of at least two or more such resilient fitting metal plates and a bracket for sandwich panel walls, wherein each resilient fitting metal plate is configured to change shape in response to hits/impacts from part of buildings or similar obstacles hitting a sandwich panel wall to which the fitting metal plate is attached to sturdy hold the sandwich panel in a non-rigid/flexible way during fires. Each resilient fitting metal plate is able to expand and contract (in a plane substantially parallel to each sandwich panel) in response to dynamic impact/shock loads, such as moving loads, hits or blows on the wall, without being subjected to permanent deformation. Instead, each resilient fitting metal plate expands during the hit and then springs back after the shock load on the sandwich panel wall has "ebbed away"/abated. Hence, the shape of the resilient fitting metal plate creates a bias urging it back to its original shape after said hit on the wall.

Still a further object is that the invention provides a resilient fitting Z r metal plate and a bracket for sandwich panel walls and a system made up of at least two or more such resilient fitting metal r plates and a bracket each resilient fitting metal plate comprises an expansion section and at least one or more fastening sections to hold together at least two sandwich panels as a joint and/or each sandwich panel securely at any supporting element in a joint between sandwich panels while allowing play for each sandwich panel by means of an fitting metal plate ability to expand and contract without permanent deformation or shape change in response to dynamic impact loads on the sandwich panels.

Another object of the invention is to provide resilient fitting metal plates and brackets and systems made up of at least two or more such resilient fitting metal plates and bracket that protect structural components of a fireproof wall from excessive heat/thermal stress enabling the wall to withstand fire for a longer period of time. The resilient fitting metal plate accomplishes this by overlappingly enclosing a sandwich panel joint in which structural components are arranged by means of enabling adding isolation material inside the fitting plate cavity "on top" of for example a gypsym board or mineral/rock wool arranged over any structural elements in the joint.

Yet another object of the invention is provided by a resilient fitting metal plate and a bracket and a system made up of at least two or more such resilient fitting metal plates and a bracket that protect any heat isolating materia placed inside the formed cavity of the resilient fitting metal plate by covering the heat isolating material hindering it from getting loose/excessive wear.

The invention has another object of providing a resilient fitting metal plate and a bracket for sandwich panel walls and a system made up of at least two or more such resilient fitting metal plates and a bracket that create a space and distance by means of their formed cavity between itself and any sandwich panel and/or supporting element enabling the wall to withstand dynamic impact loads and fires for a longer period of time. The resilient fitting metal plate is a protective cover element with a bulgy shape due to its cavity/space that is flattened out when the sandwich panel hold on to by the fitting metal plate is subjected to a dynamic impact load. Thus, the energy of the hit is absorbed by this inherent resilience of the fitting metal plate and distributed over a longer period of time preventing or at least "slowing down" any overloading/breaking of the fastening of the sandwich panel. Hence, the whole sandwich panel wall is made more durable for a longer period of time during fire.

The invention has a still further object of providing a resilient fitting metal plate and a bracket for sandwich panel walls and a system made up of at least two or more such resilient fitting metal plates and a bracket creating a space by means of their formed cavity between fire and any supporting element enabling the wall to withstand excessive heat for a longer time period. The resilient fitting metal plate is a protective cover keeping excessive heat away from any supporting element in the sandwich panel joint or at least "slows down" the heat transfer by creating a space and longer distance between fire and any supporting element for a prolonged time period.

Yet a further object is that the invention provides a resilient fitting Z r metal plate and a bracket for sandwich panel walls and a system made up of at least two or more such resilient fitting metal plates and a bracket with a formed cavity defining a space/gap that is kept airless and/or is filled with a heatproof/-resistant material that hinder/eliminates/slows down heat transfer from each resilient fitting metal plate to any construction/supporting element in a sandwich panel wall joint.

The objects are achieved by means of at least one resilient fitting metal plate and a bracket and a system comprising at least two such resilient fitting metal plates and a bracket making up a fireproof sandwich panel wall, as claimed in the associated independent claim preferred variants thereof being defined in the associated dependent claims.

The above and further objects are achieved by providing a resilient fitting metal plate and a bracket configured to hold/support/mount a single layer of sandwich panels for forming a fireproof wall. The resilient fitting metal plate is adapted to be attached with a first end to a first part of a first sandwich panel. The resilient fitting metal plate is adapted to be attached with a second end to a first part of a second sandwich panel or a supporting element at a joint of these entities. The resilient fitting metal plate is adapted to hold the first parts of the actual sandwich panels together and the bracket is adapted to attach each sandwich panel to the supporting element at the sandwich panel joint resilient fitting metal plate comprises a shape forming a cavity over the sandwich panel joint. The resilient fitting metal plate comprises an expansion section between its ends. The resilient fitting metal plate comprises a fastening section at each end. Each fastening section is configured to be securely attached to the first part of a sandwich panel or the supporting element. The expansion section is configured to allow play/range of movement for the resilient fitting metal plate in response to dynamic impact loads by being able to be stretched out and then spring back during exposure to the load. The effect is that the resilient fitting metal plate is inherently resilient, while at the same time sturdy enough to follow and firmly hold, i.e. hold back, even pull back, and keep in place any shape-changing sandwich panel when hit, such that each sandwich panel and wall withstand an impact load without breaking or collapsing similar to a strong/sturdy spring with a great deal of "stamina".

Further objects and features of the present invention will appear from the following detailed description of aspects of the invention.

According to one aspect of the disclosure, it provides a resilient fitting metal plate and a bracket according to the above aspect, wherein the cavity over the sandwich panel joint covers an outer/external surface of the first sandwich panel and/or the supporting element and an outer/external surface of the second sandwich panel and/or the supporting element. By providing a resilient fitting metal plate according to the above, a protective cover element with a bulgy shape due to its cavity/space that is flattened out when the sandwich panel hold on to by the resilient fitting metal plate is subjected to a dynamic impact load. Thus, the energy of the hit is absorbed by this inherent resilience of the fitting metal plate and distributed over larger area/surface/volume and a longer period of time preventing or at least "slowing down" any overloading/breaking of the fastening of the sandwich panel and therefore the whole sandwich wall.

According to a further aspect of the disclosure, it provides a resilient fitting metal plate and a bracket according to the above aspect, wherein the dimension of the resilient fitting metal plate and size of the covered outer/external surface of each sandwich panel and/or supporting element is dimensioned in dependence on the fire proof safety criteria to be satisfied, e.g. class EI-M for fireproof walls according to European standard.

According to another aspect of the disclosure, it provides a resilient fitting metal plate and a bracket plate according to any of the above aspects, wherein the resilient fitting metal plate is an elongated element having a cross-sectional shape that creates a distance between a plane formed along its attached ends and its expansion section.

According to one aspect of the disclosure, it provides a resilient fitting metal plate and a bracket according to any aspect above, wherein the resilient fitting metal plate is an elongated element with a cross-sectiona shape creating a bulging and/or rounded and/or at least partly cornered/edged form.

According to still another aspect of the disclosure, it provides a resilient fitting metal plate and a bracket according to any preceding aspect, wherein the resilient fitting metal plate is an elongated element having a cross-sectional shape creating a non-flat form.

According to one aspect of the disclosure, it provides a resilient fitting metal plate and a bracket according to any preceding aspect, wherein the resilient fitting metal plate is an elongated element having a cross-sectional shape defining the cavity along the fitting plate length,

According to another aspect of the disclosure, it provides a resilient fitting metal plate and a bracket according to any preceding aspect, wherein the extension of the attached ends of the resilient fitting metal plate is in parallel with each sandwich panel while the extension of the expansion section of the resilient fitting metal plate between its ends divergates at least partly in relation to the extension of the ends of the resilient fitting metal plate.

Yet according to an aspect of the disclosure, it provides a resilient fitting metal plate and a bracket according to any preceding aspect, wherein the cavity formed by the resilient fitting metal plate over the sandwich panel joint is filled with heat-/fire-/flame resistant/retardant/proof material or is airless.

According to still another aspect of the disclosure, it provides a resilient fitting metal plate and a bracket according to any preceding aspect, wherein the cavity formed by the resilient fitting metal plate over the sandwich panel joint is configured to achieve a distance between the supporting element in the joint and fire/heat/flames.

According to yet another aspect of the disclosure, it provides a resilient fitting metal plate and a bracket according to any preceding aspect, wherein the cavity formed by the resilient fitting metal plate over the sandwich panel joint is configured to cover supporting elements of varying/different sizes and/or shapes and/or dimensions in the joint between the sandwich panels.

According to one further aspect of the disclosure, it provides a resilient fitting metal plate and a bracket according to any preceding aspect, wherein the cavity formed by the resilient fitting metal plate over the sandwich panel joint is configured to cover any supporting element in the joint between the sandwich panels having at least one dimension or a size and/or thickness and/or width being smaller than the one for a sandwich panel or for more than one sandwich panel or for each sandwich panel.

According to still a further aspect of the disclosure, it provides a resilient fitting metal plate and a bracket according to any of above aspects, wherein the cavity formed by the resilient fitting metal plate over the sandwich panel joint is configured to cover any supporting element in the joint between the sandwich panels having at least one dimension or a size and/or thickness and/or width being larger than the one for a sandwich panel or for more than one sandwich panel or for each sandwich panel.

According to another aspect of the disclosure, it provides a resilient fitting metal plate and a bracket according to any preceding aspect, wherein the cavity formed by the resilient fitting metal plate over the sandwich panel joint is configured to cover any supporting element in the joint between the sandwich panels having at least one dimension or a size and/or thickness and/or width being smaller than the one for a sandwich panel or for more than one sandwich panel or for each sandwich panel and any supporting element in the joint between the sandwich panels having at least one dimension or a size and/or thickness and/or width being larger than the one for a sandwich panel or for more than one sandwich panel or for each sandwich panel.

According to a further aspect of the disclosure, it provides a resilient fitting metal plate and a bracket according to any preceding aspect, wherein the cross-sectional shape of the resilient fitting metal plate has at least partly a billowing or wavy form.

According to one other aspect of the disclosure, it provides a system of resilient fitting metal plates and a bracket configured to hold a single layer of sandwich panels for forming a fireproof wall comprising supporting elements between sandwich panels and a bracket for attaching each sandwich panel to a supporting element. The system utilizes at least two resilient fitting metal plates according to any preceding claim. The resilient fitting metal plates and brackets are adapted to be mounted at different sides of the fireproof wall. Each resilient fitting metal plate is adapted to be attached with a first end to a first part of a first sandwich panel. Each resilient fitting metal plate is adapted to be attached with a second end to a first part of a second sandwich panel or a supporting element at a joint of these entities. Each resilient fitting metal plate is adapted to hold the parts of the actual sandwich panels together or to join each sandwich panel with the supporting element as a joint overlapping coupling at one side of the fire-proof wall. Each resilient fitting metal plate comprises a shape forming a cavity over the sandwich panel joint at one side of the fireproof wall. Each resilient fitting metal plate comprises an expansion section between its ends. Each resilient fitting metal plate comprises a fastening section at each end

Each fastening section is configured to be securely attached to a sandwich panel and/or a supporting element at one side of the fireproof wall. The expansion section is configured to allow play/range of movement for each resilient fitting metal plate in response to dynamic impact loads by being able to be stretched out and spring back during exposure to dynamic impact loads, wherein at least a first resilient fitting metal plate is arranged at the side of the fireproof wall that is exposed directly to fire and dynamic impact loads, and at least a second resilient fitting metal plate is arranged at the opposite side of the fireproof wall that is not directly exposed to the fire and the dynamic impact loads, such that when the first resilient fitting metal plate has been exposed to fire for a certain duration of time, only the second resilient fitting metal plate are able to stretch out and spring back and thereby withstand dynamic impact loads transferred from the directly exposed or hit side of the fireproof wall to its indirectly hit side. The advantage of having at least two opposite resilient fitting metal plates each being a protective cover element with a bulgy shape due to its cavity/space that is flattened out when the sandwich panel hold on to by the resilient fitting metal plate is subjected to a dynamic impact load is that at least one of the resilient fitting metal plates is able to hold on the sandwich panel even though the other resilient fitting metal plate has lost its "stamina", i.e. its strength due to a prolonged exposure to excessive heat at its side of the sandwich panel wall. Thus, the energy of the hit is absorbed by this still existing inherent resilience of the fitting plate on the side of the sandwich panel wall where less heat is present. This makes it possible to distribute the hit/blow energy from the "hot side" of the wall to the "colder side" of the wall and over a longer period of time preventing or at least "slowing down" any overloading/breaking of the fastening of the sandwich panel. Hence, the whole sandwich panel wall is made more durable for a longer period of time during fire. The resilient fitting metal plate is adapted to fit over joints between sandwich panels with supporting elements of different shapes/sizes in the joint. Supporting elements do not have to have the same shape/size as any of adjoining sandwich panels. The size of each supporting element is measured as its width or breadth or length or thickness or any combination of those measures or dimensions, e.g. a supporting element is larger if wider/broader/longer/thicker than at least one of the sandwich panels at the joint or a supporting element is smaller if narrower or more slender or shorter/thinner than at least one of the sandwich panels at the joint.

### BRIEF DESCRIPTION OF THE DRAWINGS

In the following detailed portion of the present description, the invention will be explained in more detail with reference to the exemplary embodiments shown in the drawings, in which:
Fig. 1 is a planar depiction of full middle wall sections and parts of end wall sections of a sandwich panel wall comprising resilient fitting metal plate and a bracket according to the present invention.
Fig. 2 is a planar cross-section of a horizontal joint between two sandwich panels comprising fastening means and sealing according to viewing via arrow A in Fig. 1 according to an embodiment of the present invention.
Figs. 3A and 3B are planar cross-sections of a vertical joint between two sandwich panels/wall sections, the joint further comprising at least one supporting element between panels/wall sections viewed via arrow B in Fig. 1 according to embodiments of the present invention.
Fig. 4 is a planar depiction of cross-section shapes for differently shaped resilient fitting metal plates according to embodiments of the present invention.

### DETAILED DESCRIPTION

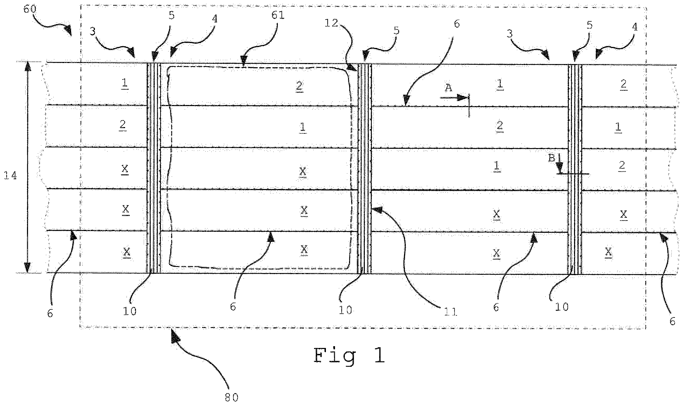

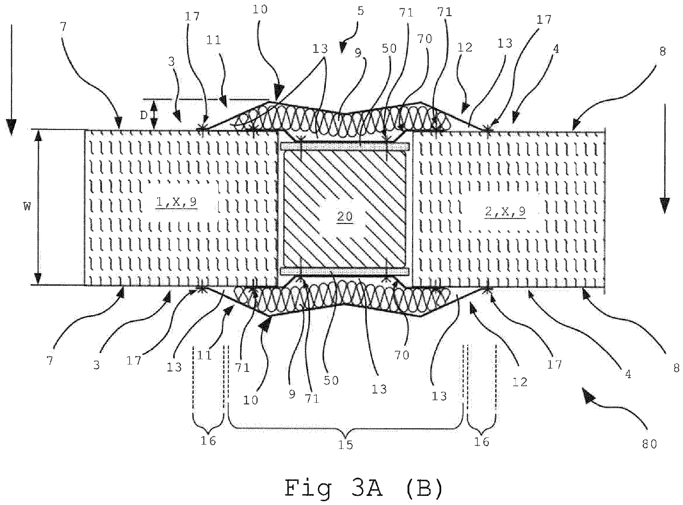

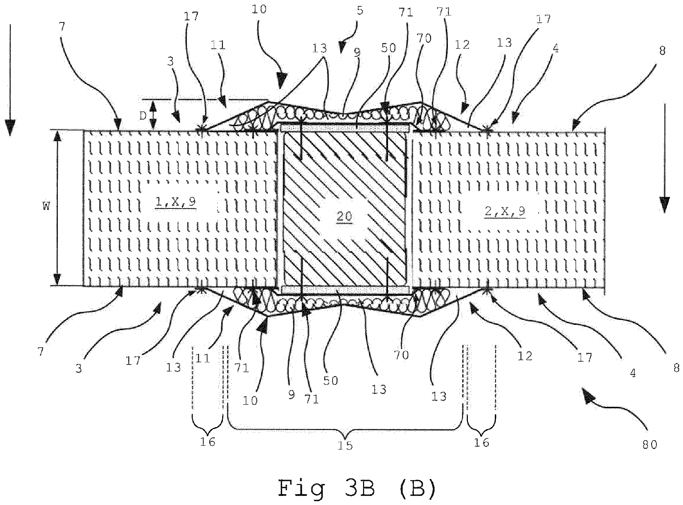

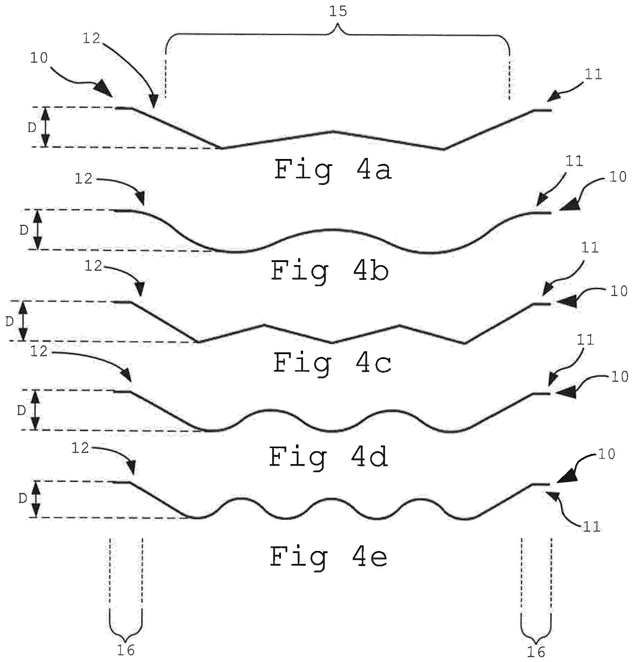

In the following, see figs. 1 to 4e, a resilient fitting metal plate 10, sandwich panels 1, 2, X and a fire-proof wall 60 with wall sections 61 made up of at least one resilient fitting metal plate and sandwich panel and any Supporting element 20 (figs. 3A, 3B) together with a system 80 of at least two or more such resilient fitting metal plates 10 will be described. Sandwich panel X is an arbitrary sandwich panel among at least two or more panels 1, 2, see fig. 1. Figs. 1, 3A, 3B and 4 show the resilient fitting plate 10, which is made of metal plate of a thickness of about 1 mm. Resilient fitting metal plate 10 has a width and/or lateral dimension of about 0.1 m to 0.5 m or preferred from 0.2 m to 0.3 m wider and/or larger than corresponding dimension of any supporting element 20. Resilient fitting metal plate 10 has a length from 1 to 5 m or preferred from 2 to 4 m or most preferred from 2.5 to 3 m seen in the height direction of wall 60, 61 (in lengthwise direction 14, i.e. vertically in fig. 1). Each sandwich panel 1, 2, X comprises at least two outer layers 7, 8 of stainless, galvanised and/or painted steel plate with a core 9 of isolation material arranged therebetween. Core 9 comprises rock/mineral wool or other fire-resistant/-retardant material as isolation material. The isolation material of the core 9 is arranged between an internal plate 7, 8 and an external plate 7, 8 by means of fixation, e.g. by moulding, melting and curing, mechanical adhesion or other means of attachment, such as adhesive compounds. Thickness of core 9 typically ranges from 70 - 300 mm depending on desired characteristics of the sandwich panel 1, 2, X.

The fireproof wall 60 of Fig 1 comprises sandwich panel wall sections 61. Wall sections 61 in turn comprises at least one sandwich panel 1, 2, X and at least one resilient fitting metal plate 10. Each sandwich panel is arranged horizontally as shown in Fig 1. In other cases, each sandwich panel is orientated vertically or in a combination of sandwich panels some are orientated horizontally and some vertically. Each resilient fitting metal plate is arranged vertically. Each resilient fitting metal plate extends in a direction perpendicular to the lengthwise/longitudinal direction of extension of each sandwich panel 1, 2, X. Each resilient fitting metal plate is arranged in a stand-up orientation. Fireproof wall 60 comprises at least one supporting element 20 in the form of a pillar or a body of pillars and laying sandwich panels extending between the pillars and stacked on top of each other to form isolated wall sections 61 connected by resilient fitting metal plates 10 making up a whole fireproof wall 60. The resilient fitting metal plate cover the adjoining sandwich panels 1, 2, X and/or one or more supporting element 20 placed between the sandwich panels.

The adjoined ends of the sandwich panels are covered by resilient fitting metal plates 10. At least one resilient fitting metal plate 10 is arranged over each number of adjoined sandwich panel ends 3, 4. In fig 1, resilient fitting metal plates 10 cover adjoining ends of sandwich panels 1, 2, X from top to bottom of the fireproof wall forming vertical 5, 6 and/or horizontal joints. In some cases, only one resilient fitting metal plate is required to cover the whole length of each joint 5, 6. Hence, length 14 of the resilient fitting metal plate corresponds to the height of the fireproof wall 60. In other cases, the height of fireproof wall 60/section 61 extends the length 14 of the resilient fitting metal plate such that more than one resilient fitting metal plate is required to cover the whole length of each joint 5, 6. Hence, a joint in the lateral direction of the resilient fitting metal plates is required (not shown). In some cases, length 14 of the resilient fitting metal plate is adapted to either cover each joint 5, 6 somewhat in that a second resilient fitting metal plate 10 is attached with a slight overlap over a first resilient fitting metal plate or the adjoining resilient fitting metal plates abut edge to edge, i.e. their edges butt against each other at the joint after assembly.

In figs. 1, 3A, 3B, resilient fitting metal plate 10 is shown holding/supporting sandwich panels 1, 2, X for forming the fireproof single layer sandwich panel wall 60 and its wall sections 61. Resilient fitting metal plate 10 is attached with a first end 11 (or second end 12) to a first end 3 of a first sandwich panel 1, X. The resilient fitting metal plate is attached with a second end 12 (or the first end 11] to a first end 4 of a second sandwich panel 2, X. The resilient fitting metal plate is adapted to join the ends 3, 4 of the sandwich panels. The resilient fitting metal plate is configured to overlappingly cover the joint 5, 6 and the sandwich panel ends. The resilient fitting metal plate 10 has a shape configured to enclose the joint between the sandwich panels by forming a cavity 13 over the sandwich panel joint 5, 6.

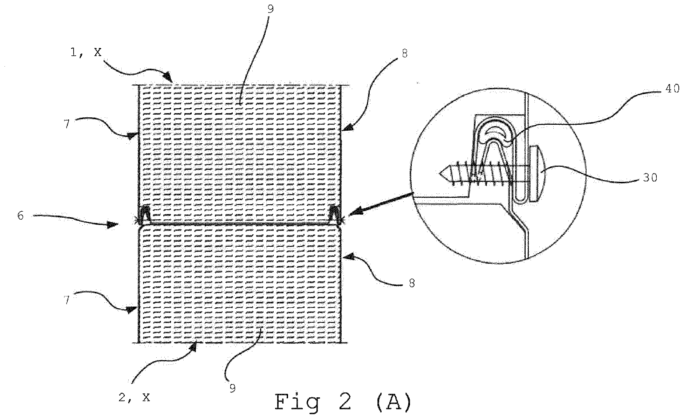

In figs. 2, 3A, 3B, resilient fitting metal plate 10 is shown with its cavity 13 over the sandwich panel joint 5, 6. One resilient fitting metal plate 10 and its cavity cover an outer/external surface 7 of the first sandwich panel 1, X. Another resilient fitting metal plate and its cavity cover an outer and/or external surface 8 of the second sandwich panel 2, X. The size/area of the covered outer surfaces or plates 7, 8 of each sandwich panel 1, 2, X is dimensioned in dependence on the fireproof safety criteria to be satisfied, such as class EI-M for fireproof walls. One criterion is the time, during which the sandwich panel wall 60, 61 must withstand a fire without collapsing. The time duration is typically between 30-90 minutes or up to 240 minutes.

Resilient fitting metal plate 10 is an elongated element. The resilient fitting metal plate 10 has a cross-sectional shape that creates a distance D in a direction outwards relative/from/out of the plane of the sandwich panels 1, 2, X (figs. 3A, 3B, 4a to 4e). In figs. 3A, 3B, distance D is only shown at upper resilient fitting metal plate 10 but also found at the lower resilient fitting metal plate. Distance D is defined being between planes formed along/in parallel with the attached resilient fitting metal plate ends 11, 12 and the remaining extension 15 of the resilient fitting metal plate 10 between its ends. Distance D is measured in a plane/direction across/perpendicular the plane of its proximal attached ends 11, 12 of the resilient fitting metal plate 10/the adjacent/adjoining sandwich panels 1, 2, X.

The inventive resilient fitting plate 10 is made of metal, e.g. a SUB 350 steel.

In figs 4a to 4e, shown shapes of the resilient fitting metal plate 10 is formed from a flat metal plate blank by folding/bending/pressing it into a bulgy shape. The formed cross-sectional shape of each resilient fitting metal plate 10 preferably comprises/corresponds to a sine/sinus/sinusoida shape, a billow shape, a wavy shape, a bowing shape, or a combination of any of these shapes, at least partly. Alternatively, the cross-section of each resilient fitting metal plate 10 corresponds to a sine, sinus or sinusoidal shape, a billow shape, a wavy shape, a bowing shape or a combination of any of these shapes, at least partly, with slightly/gently/weakly bent angles. A way of making the resilient fitting metal plate shape is by hydropressing.

As seen in figs. 1, 3A, 3B, 4a to 4e, resilient fitting metal plate 10 is an elongated element having a cross-sectional shape creating a bulging and/or rounded (see Figs. 4b, 4d and 4e) and/or cornered/edged appearance/form (see Figs. 4a, 4c), in some cases at least partly. The cross-sectional shape of the resilient fitting metal plate 10 extends partly along its length or along its whole length 14. In figs. 3A, 3B, 4a to 4e are shown that resilient fitting metal plate 10 comprises a middle section 15 being an expansion section of the resilient fitting metal plate. In figs. 3A, 3B, 4a to 4e are shown that the resilient fitting metal plate 10 comprises two outer, i.e. proximal sections 16 in the form of one fastening section at each of its two ends 11, 12. The resilient fitting metal plate improves the sturdiness/durability of the wall 60, 61 during fires by securing each sandwich panel 1, 2, X in place in the wall when affected by dynamic impacts while allowing some play and movement for each sandwich panel in response to such impacts. The resilient fitting metal plate has a cross-sectional shape creating a non-flat appearance/form (at least partly along its length 14). The resilient fitting metal plate has a cross-section defining the cavity over the sandwich panel joint 5, 6 along the resilient fitting plate length 14. The extension of the attached resilient fitting metal plate ends 11, 12 is in parallel with each sandwich panel 1, 2, X, while the extension of the resilient fitting metal plate between its ends divergates outwards at least partly in relation thereto. The cavity 13 over the sandwich panel joint 5, 6 is configured to supporting elements 20 of varying/different sizes and/or shapes at/in the joint between sandwich panels.

As shown in figs. 3A and 3B, the resilient fitting metal plate 10 and its cavity 13 over the joint 5, 6 is filled with fireproof material 9 (such as stone wool padding) or is airless.

The resilient fitting plate 10 and cavity 13 over the joint 5, 6 is configured to cover any supporting element 20 at/in the joint 5, 6 between sandwich panels 1, 2, X with a size/thickness and/or width in fig 3A smaller than a sandwich panel. In one aspect, the cavity 13 over joint 5, 6 is configured to cover any element 20 in the joint between sandwich panels having a size and/or thickness and/or width larger than a sandwich panel in fig 3B. In other aspects, the cavity over joint 5, 6 is configured to cover any element 20 having a size/thickness/width smaller than each sandwich panel and any element 20 having a size/thickness/width larger than each sandwich panel. Size/width/thickness or breadth/depth of supporting element 20 and/or any sandwich panel 1, 2, X is shown with a double arrow and numeral W to the left in figs. 3A and 3B.

Resilient fitting metal plate 10 is configured to hold/support/mount sandwich panels 1, 2, X to form the fireproof wall 60 and its sections 61. The resilient fitting metal plate is attached with its first or second proximal end 11, 12 to the first end 3 of the first sandwich panel 1, X. The resilient fitting metal plate 10 is attached with its second or first proximal end 12, 11 to the first end 4 of the second sandwich panel 2, X. The end of each sandwich panel is opposite or faces the end of the other sandwich panel at the joint 5, 6 between the panels. The resilient fitting metal plate is adapted to overlappingly cover the joint and ends 3, 4 of adjoining sandwich panels. Resilient fitting Z r metal plate 10 has a shape creating an inherent resilience in itself, i.e. makes the resilient fitting metal plate inherently resilient. This is achieved as the extension of the resilient fitting metal plate at its attached proximal ends 11, 12 is in parallel with the sandwich panels but divergates at least partly between its ends to form the cavity 13/middle section 15. This achieves "extra" length/size/material/area/volume of the resilient fitting metal plate enabling it to change shape when pulled or pushed at its ends 11, 12 due to the firm/sturdy attachment to each sandwich panel. Any forces due to any shape change of a sandwich panel when subjected to dynamic impact loads are transferred to the resilient fitting metal plate. The "extra" length/material due to the dimension, i.e. breadth/ width and/or length of the resilient fitting metal plate and its shape together with material characteristics of the resilient fitting plate meta give a pliable/flexible shape-change ability of the resilient fitting metal plate 10 but sturdy holding of any sandwich panel 1, 2, X preventing or at least greatly reducing any permanent deformation of the resilient fitting metal plate itself during/after load.

Each resilient fitting metal plate 10 joins the end 3 of at least one sandwich panel 1, X to the end 4 of at least one other sandwich panel 2, X. Each resilient fitting metal plate attaches an end 3, 4 of a sandwich panel 1, 2, X and/or the ends of at least two sandwich panels to a supporting element 20. Each resilient fitting metal plate attaches at least one end 3, 4 of a sandwich panel to supporting element 20. Each resilient fitting plate 10 joins the ends 3, 4 of at least two sandwich panels to each other and attaches at least one end of at least one of the sandwich panels 1, 2, X to a supporting element 20.

The resilient fitting metal plate 10 has a cross-section corresponding to a billowing or wavy form.

This form of the resilient fitting metal plate 10 enable it to flex from its original shape and back without permanent deformation when one or more sandwich panels 1, 2, X, which the resilient fitting metal plate is attached to, are subjected to dynamic shock/impact loads.

System 80 utilizing at least two resilient fitting metal plates 10 configured to hold/support a single layer of sandwich panels 1, 2, X forming fireproof wall 60, 61. System 80 comprises resilient fitting metal plates 10 mounted/attached at different sides of the fireproof wall. Each of the resilient fitting metal plates in system 80 corresponds to the resilient fitting metal plate 10 above. Each resilient fitting metal plate 10 of system 80 holds ends 3, 4 of sandwich panels together or joins a sandwich panel with a supporting element 20 as a joint overlapping coupling at a side of the wall. Each resilient fitting metal plate 10 of the system 80 has the cavity 13 over the joint 5, 6 at one side of the wall. Each fastening section 16 is securely attached to one or more sandwich panels 1, 2, X and/or supporting element 20 at a side of the wall along the resilient fitting plate length 14. Expansion section 15 allows play/range of movement for the resilient fitting metal plate 10 at a side of the fireproof wall in response to dynamic impact loads on the panel/-s by being able to be stretched out during and then spring back after impact loads on the panel/-s "ebb away". A first/inner resilient fitting metal plate 10 of at least two resilient fitting metal plates of system 80 is arranged at the side of the fireproof wall directly exposed to fire and impact loads/shocks, e.g. the "inner hot wall side". A second or outer resilient fitting metal plate of the at least two resilient fitting metal plates of system 80 is arranged at the opposite side of the wall not directly exposed to fire and impact loads, e.g. the "outer cold wall side". If inner resilient fitting metal plate 10 has been exposed to fire/heat/thermal stress for a certain duration of time as first line of defence against excessive thermal load, it becomes softer or weaker and if then subjected to direct impact/shock load, the outer/colder resilient fitting metal plate 10 "takes over" the primary sandwich panel holding function as it still is able to stretch out and spring back to withstand this impact energy transferred from the directly exposed or hit "inner hot wall side" of the fireproof wall to its indirectly hit "cold wall side"/resilient fitting metal plate 10. Figs. 3A, 3B each shows a cross-section of wall 60, 61 from above. The direction of dynamic impacts on the wall is shown with vertical arrows (right/ left in figs. 3A, 3B) pointing downwards, however, any dynamic impact to the wall 60, 61 could be transferred in opposite direction, i.e. upwards in the figures, if the lower side of the wall was hit, imitating hits from different sides of the wall, i.e. from inside or outside. Fig. 3A shows a supporting element 20 with a size, e.g. a width/thickness W smaller than for a sandwich panel 1, 2, X. In fig. 3B, a supporting element 20 has a size, e.g. a width/thickness W larger than for a sandwich panel. Measure W also is applicable if the supporting element 20 is asymmetrically shaped and/or is placed or orientated asymmetrically, e.g. turned and/or skew/inclined relative any panel 1, 2, X, in the joint relative the sandwich panels and/or in the space formed by the joint, e.g. placed closer to the inner wall side than the outer wall side or vice versa, and/or is larger in one dimension than in another, e.g. if rectangular instead of square as in figs. 3A and 3B, with the largest measure extending perpendicularly relative the sandwich panel planes.

### NOMENCLATURE

1 A first sandwich panel
2 A second sandwich panel
3 One/First end/part of the first sandwich panel
4 One/First end/part of the second sandwich panel
5 Vertical joint between sandwich panels
6 Horizontal joint between sandwich panels
7 Outer/External/Internal/Exposed/Metal plate/Mantle surface of the first sandwich panel
8 Outer/External/Internal/Exposed/Metal plate/Mantle surface of the second sandwich panel
9 Isolation material, such as rock (mineral) wool or the like
10 Resilient fitting metal plate for joining sandwich panels
11 First proximal/longitudinal end of the resilient fitting metal plate
12 Second proximal/longitudinal end of the resilient fitting metal plate
13 Space/Cavity formed by the resilient fitting metal plate over the sandwich panel joint
14 Length and longitudinal direction of the resilient fitting metal plate
15 Expansion section of the resilient fitting metal plate
16 Fastening section of the resilient fitting metal plate
17 Fastening means, e.g. self-tapping/-boring screw, for the resilient fitting metal plate
20 Supporting element, e.g. a girder, pillar, column, bearer, rib, upright/vertical strut, roof, rafter/roof truss, supporting beam, cross beam, bar, joist, crown joist, summer
30 Fastening means, e.g. self-tapping/-boring screw, for sandwich panel
40 Sealing
50 Gypsum board or the like fire-retardant material
60 Fire-proof wall of sandwich panels
61 Section of the fire-proof wall
70 Bracket for attaching each sandwich panel to the supporting element 20
71 Fastening means, e.g. self-tapping/-boring screw, for bracket and sandwich panel
80 System of at least two or more resilient fitting metal plates
D: Distance in a direction substantially perpendicular/perpendicular/outwards relative/from/out of a sandwich panel plane
W: Size/width/thickness/depth/breadth or largest/smallest measure of a supporting element 20 and/or a sandwich panel 1, 2, X
X: An arbitrary sandwich panel among at least two or more panels

## Claims

1. A resilient fitting metal plate (10) and a bracket (70) used to hold a single layer of sandwich panels (1, 2, X) to form a fireproof wall (60, 61) with a supporting element (20), wherein the resilient fitting metal plate (10) is adapted to be attached with a first end (11) to a first part (3) of a first sandwich panel (1) and adapted to be attached with a second end (12) to a first part (4) of a second sandwich panel (2) or to the supporting element (20) as a joint overlapping coupling at a side of the fireproof wall (60, 61), the resilient fitting metal plat (10) being adapted to hold the first parts (3, 4) of the sandwich panels (1, 2, X) together, and the bracket (70) is adapted to attach each sandwich panel (1, 2, X) to the supporting element (20) at the sandwich panel joint (5, 6), which resilient fitting metal plate (10) has a shape forming a cavity (13) over a sandwich panel joint (5, 6), and has an expansion section (15) between its ends (11, 12) and a fastening section (16) at each end (11, 12), wherein each fastening section (16) is configured to be securely attached to the first part (3, 4) of a sandwich panel (1, 2, X) or to the supporting element (20) and the expansion section (15) is configured to allow play/range of movement for the resilient fitting metal plate (10) in response to dynamic impact loads by being able to be stretched out and then spring back during exposure to dynamic impact loads.

2. A resilient fitting metal plate (10) and a bracket (70) according to claim 1, wherein the resilient fitting metal plate (10) is an elongated element having a cross-sectional shape that creates a distance between a plane formed along its attached ends (11, 12) and its expansion section (15).

3. A resilient fitting metal plate (10) and a bracket (70) according to claim 1 or 2, wherein the resilient fitting metal plate (10) is an elongated element having a cross-sectional shape creating a bulging and/or rounded and/or at least partly cornered/edged form.

4. A resilient fitting metal plate (10) and a bracket (70) according to claim 1, 2 or 3, wherein the resilient fitting metal plate (10) is an elongated element having a cross-sectional shape creating a non-flat form.

5. A resilient fitting metal plate (10) and a bracket (70) according to any of claims 1 to 4, wherein the resilient fitting metal plate (10) is an elongated element having a cross-sectional shape defining the cavity (13) along the fitting metal plate length (14).

6. A resilient fitting metal plate (10) and a bracket (70) according to any of claims 1 to 5, wherein the extension of the attached ends (11, 12) of the resilient fitting metal plate (10) is in parallel with each sandwich panel (1, 2) while the extension of the expansion section (15) of the resilient fitting metal plate (10) between its ends divergates at least partly in relation to the extension of the ends of the resilient fitting metal plate (10).

7. A resilient fitting metal plate (10) and a bracket (70) according to any of claims 1 to 6, wherein the cavity (13) formed by the resilient fitting metal plate (10) over the sandwich panel joint (5, 6) is filled with heat-/fire-/flame resistant/retardant/proof material or is airless.

8. A resilient fitting metal plate (10) and a bracket (70) according to any of claims 1 to 7, wherein the cavity (13) formed by the resilient fitting metal plate (10) over the sandwich panel joint (5, 6) is configured to achieve a distance between the supporting element (20) in the joint (5, 6) and fire/heat/flames.

9. A resilient fitting metal plate (10) and a bracket (70) according to any of claims 1 to 8, wherein the cavity (13) formed by the resilient fitting metal plate (10) over the sandwich panel joint (5, 6) is configured to cover supporting elements (20) of varying/different sizes/shapes in the joint between the sandwich panels (1, 2).

10. A resilient fitting metal plate (10) and a bracket (70) according to any of claims 1 to 9, wherein the cavity (13) formed by the resilient fitting metal plate (10) over the sandwich panel joint (5, 6) is configured to cover any supporting element (20) in the joint (5, 6) between the sandwich panels (1, 2) having at least one dimension being smaller than the one for a sandwich panel (1, 2).

11. A resilient fitting metal plate (10) and a bracket (70) according to any of claims 1 to 10, wherein the cavity (13) formed by the resilient fitting metal plate (10) over the sandwich panel joint (5, 6) is configured to cover any supporting element (20) in the joint between the sandwich panels (1, 2) having at least one dimension being larger than the one for a sandwich panel (1, 2).

12. A resilient fitting metal plate (10) and a bracket (70) according to any of claims 1 to 11, wherein the cavity (13) formed by the resilient fitting metal plate (10) over the sandwich panel joint (5, 6) is configured to cover any supporting element (20) in the joint between the sandwich panels (1, 2) having at least one dimension being smaller than the one for a sandwich panel; (1, 2) and any supporting element (20) in the joint (5, 6) between the sandwich panels (1, 2) having at least one dimension being larger than the one for a sandwich panel (1, 2).

13. A resilient fitting metal plate (10) and a bracket (70) according to any of claims 1 to 12, wherein the cross-sectional shape of the resilient fitting metal plate (10) has at least partly a billowing or wavy form.

14. A resilient fitting metal plate (10) and a bracket (70) according to any of claims 1 to 13, wherein the resilient fitting metal plate (10) has a shape forming the cavity (13) over the sandwich panel joint (5, 6), the supporting element (20) and the bracket (70).

15. Fireproof wall (60, 61) comprising supporting elements (20) between sandwich panels (1, 2, X) and a bracket (70) according to any preceding claim for attaching each sandwich panel (1, 2, X) to a supporting element (20) and at least one resilient fitting metal plate (10) according to any preceding claim.

16. Fireproof wall (60, 61) according to claim 15, wherein the resilient fitting metal plate (10) is adapted to hold the parts (3, 4) of the sandwich panels (1, 2, X) together or to join each sandwich panel (1, 2) with the supporting element (20).

17. Fireproof wall (60, 61) according to claim 15 or 16, wherein the cavity (13) over the sandwich panel joint (5, 6) covers an outer/external surface (7) of the first sandwich panel (1) and the supporting element (20) and an outer/external surface (8) of the second sandwich panel (2) and the supporting element (20).

18. Fireproof wall (60, 61) according to claim 17, wherein the dimension of the resilient fitting metal plate (10) and its expansion section (15) between its ends (11, 12) and fastening section (16) at each end and the size of the covered outer/external surface (7, 8) of each sandwich panel (1, 2, X) and supporting element (20) are dimensioned to create a space and distance (D) by means of the cavity (13) between the resilient fitting metal plate (10) and the sandwich panel(s) (1, 2, X) and/or supporting element (20) enabling the fireproof wall (60, 61) to withstand dynamic impact loads and fires for a longer period of time for fireproof walls (60, 61), up to 240 minutes.

19. Fireproof wall (60, 61) comprising supporting elements (20) between sandwich panels (1, 2, X) and a bracket (70) according to any of claims 1 to 14 for attaching each sandwich panel (1, 2) to a supporting element (20), and at least two resilient fitting metal plates (10) of which each resilient fitting metal plate (10) is configured to hold a single layer of sandwich panels (1, 2) according to any of claims 1 to 14, which resilient fitting metal plates (10) and brackets (70) are adapted to be mounted at different sides of the fireproof wall (60, 61), each resilient fitting metal plate (10) is adapted to hold the parts (3, 4) of the actual sandwich panels (1, 2) together as the joint overlapping coupling at one side of the fireproof wall, (60, 61), each resilient fitting metal plate (10) has a shape, which forms a cavity (13) over the sandwich panel joint (5, 6) and the bracket (70) attaching each sandwich panel (1, 2) to the supporting element (20) at one side of the fireproof wall (60, 61), wherein at least a first resilient fitting metal plate (10) and a bracket (70) are arranged at the side of the fireproof wall (60, 61) that is exposed directly to fire and dynamic impact loads, and at least a second resilient fitting metal plate (10) and a bracket (20) are arranged at the opposite side of the fireproof wall (60, 61) that is not directly exposed to the fire and the dynamic impact loads, whereby, when the first resilient fitting metal plate (10) has been exposed to fire for a certain duration of time this first resilient fitting metal plate (10) looses its strength due to a prolonged exposure to excessive heat at its side of the sandwich panel wall, only the second resilient fitting metal plate (10) on the side of the sandwich panel wall where less heat is present is able to stretch out and spring back and thereby withstand dynamic impact loads transferred from the directly exposed or hit side of the fireproof wall (60, 61) to its indirectly hit side.

## Patentansprüche

1. Elastische Fitting-Metallplatte (10) und eine Halterung (70), die zum Halten einer Einzelschicht von Sandwichpaneelen (1, 2, X) verwendet wird, um eine feuerbeständige Wand (60, 61) mit einem Unterstützungselement (20) zu bilden, wobei die elastische Fitting-Metallplatte (10) dazu angepasst ist, mit einem ersten Ende (11) an einem ersten Teil (3) eines ersten Sandwichpaneels (1) befestigt zu werden, und dazu angepasst ist, mit einem zweiten Ende (12) an einem ersten Teil (4) eines zweiten Sandwichpaneels (2) oder an dem Unterstützungselement (20) als eine überlappende Verbindungskupplung an einer Seite der feuerbeständigen Wand (60, 61) befestigt zu werden, wobei die elastische Fitting-Metallplatte (10) zum Zusammenhalten der ersten Teile (3, 4) der Sandwichpaneele (1, 2, X) angepasst ist, und die Halterung (70) zur Befestigung jedes Sandwichpaneels (1, 2, X) an dem Unterstützungselement (20) an der Sandwichpaneelverbindung (5, 6) angepasst ist, welche elastische Fitting-Metallplatte (10) eine Form aufweist, die einen Hohlraum (13) über einer Sandwichpaneelverbindung (5, 6) bildet, und einen Ausdehnungsabschnitt (15) zwischen ihren Enden (11, 12) und einen Befestigungsabschnitt (16) an jedem Ende (11, 12) aufweist, wobei jeder Befestigungsabschnitt (16) ausgelegt ist, um sicher an dem ersten Teil (3, 4) eines Sandwichpaneels (1, 2, X) oder an dem Unterstützungselement (20) befestigt zu werden, und der Ausdehnungsabschnitt (15) so ausgelegt ist, dass ein Spiel/ Bewegungsbereich für die elastische Fitting-Metallplatte (10) als Reaktion auf dynamische Stoßbelastungen ermöglicht wird, indem er ausdehnbar ist und dann zurückspringt, wenn er dynamischen Stoßbelastungen ausgesetzt wird.

2. Elastische Fitting-Metallplatte (10) und eine Halterung (70) nach Anspruch 1, wobei die elastische Fitting-Metallplatte (10) ein längliches Element mit einer Querschnittsform ist, die einen Abstand zwischen einer Ebene, die entlang ihren befestigten Enden (11, 12) gebildet ist, und ihrem Ausdehnungsabschnitt (15) erzeugt.

3. Elastische Fitting-Metallplatte (10) und eine Halterung (70) nach Anspruch 1 oder 2, wobei die elastische Fitting-Metallplatte (10) ein längliches Element mit einer Querschnittsform ist, die eine ausbeulende und/oder abgerundete und/oder mindestens teilweise eckige/kantige Form erzeugt.

4. Elastische Fitting-Metallplatte (10) und eine Halterung (70) nach Anspruch 1, 2 oder 3, wobei die elastische Fitting-Metallplatte (10) ein längliches Element mit einer Querschnittsform ist, die eine nicht flache Form erzeugt.

5. Elastische Fitting-Metallplatte (10) und eine Halterung (70) nach einem der Ansprüche 1 bis 4, wobei die elastische Fitting-Metallplatte (10) ein längliches Element mit einer Querschnittsform ist, die den Hohlraum (13) entlang der Fitting-Metallplattenlänge (14) definiert.

6. Elastische Fitting-Metallplatte (10) und eine Halterung (70) nach einem der Ansprüche 1 bis 5, wobei die Verlängerung der befestigten Enden (11, 12) der elastischen Fitting-Metallplatte (10) parallel zu jedem Sandwichpaneel (1, 2, X) ist, während die Verlängerung des Ausdehnungsabschnitts (15) der elastischen Fitting-Metallplatte (10) zwischen ihren Enden (11, 12) zumindest teilweise in Bezug auf die Verlängerung der Enden (11, 12) der elastischen Fitting-Metallplatte (10) divergiert.

7. Elastische Fitting-Metallplatte (10) und eine Halterung (70) nach einem der Ansprüche 1 bis 6, wobei der Hohlraum (13), der durch die elastische Fitting-Metallplatte (10) über der Sandwichpaneelverbindung (5, 6) gebildet ist, mit einem hitze-/feuer-/flammfesten/-beständigen/-sicheren Material versehen ist oder luftlos ist.

8. Elastische Fitting-Metallplatte (10) und eine Halterung (70) nach einem der Ansprüche 1 bis 7, wobei der Hohlraum (13), der durch die elastische Fitting-Metallplatte (10) über der Sandwichpaneelverbindung (5, 6) gebildet ist, dazu ausgelegt ist, einen Abstand zwischen dem Unterstützungselement (20) in der Verbindung (5, 6) und Feuer/Hitze/Flammen zu erzielen.

9. Elastische Fitting-Metallplatte (10) und eine Halterung (70) nach einem der Ansprüche 1 bis 8, wobei der Hohlraum (13), der durch die elastische Fitting-Metallplatte (10) über der Sandwichpaneelverbindung (5, 6) gebildet ist, zur Abdeckung von Unterstützungselementen (20) variierender/unterschiedlicher Größen/Formen in der Verbindung zwischen den Sandwichpaneelen (1, 2, X) ausgelegt ist.

10. Elastische Fitting-Metallplatte (10) und eine Halterung (70) nach einem der Ansprüche 1 bis 9, wobei der Hohlraum (13), der durch die elastische Fitting-Metallplatte (10) über der Sandwichpaneelverbindung (5, 6) gebildet ist, zur Abdeckung eines Unterstützungselements (20) in der Verbindung (5, 6) zwischen den Sandwichpaneelen (1, 2) mit mindestens einer Abmessung, die kleiner als die für ein Sandwichpaneel (1, 2) ist, ausgelegt ist.

11. Elastische Fitting-Metallplatte (10) und eine Halterung (70) nach einem der Ansprüche 1 bis 10, wobei der Hohlraum (13), der durch die elastische Fitting-Metallplatte (10) über der Sandwichpaneelverbindung (5, 6) gebildet ist, zur Abdeckung eines Unterstützungselements (20) in der Verbindung zwischen den Sandwichpaneelen (1, 2) mit mindestens einer Abmessung, die größer als die für ein Sandwichpaneel (1, 2) ist, ausgelegt ist.

12. Elastische Fitting-Metallplatte (10) und eine Halterung (70) nach einem der Ansprüche 1 bis 11, wobei der Hohlraum (13), der durch die elastische Fitting-Metallplatte (10) über der Sandwichpaneelverbindung (5, 6) gebildet ist, zur Abdeckung eines Unterstützungselements (20) in der Verbindung zwischen den Sandwichpaneelen (1, 2) mit mindestens einer Abmessung, die kleiner als die für ein Sandwichpaneel (1, 2) ist, und eines Unterstützungselements (20) in der Verbindung (5, 6) zwischen den Sandwichpaneelen (1, 2) mit mindestens einer Abmessung, die größer als die für ein Sandwichpaneel (1, 2) ist, ausgelegt ist.

13. Elastische Fitting-Metallplatte (10) und eine Halterung (70) nach einem der Ansprüche 1 bis 12, wobei die Querschnittsform der elastischen Fitting-Metallplatte (10) zumindest teilweise eine wogende oder gewellte Form aufweist.

14. Elastische Fitting-Metallplatte (10) und eine Halterung (70) nach einem der Ansprüche 1 bis 13, wobei die elastische Fitting-Metallplatte (10) eine Form aufweist, die den Hohlraum (13) über der Sandwichpaneelverbindung (5, 6), das Unterstützungselement (20) und die Halterung (70) bildet.

15. Feuerbeständige Wand (60, 61) umfassend Unterstützungselemente (20) zwischen Sandwichpaneelen (1, 2, X) und eine Halterung (70) nach einem der vorhergehenden Ansprüche zur Befestigung jedes Sandwichpaneels (1, 2, X) an einem Unterstützungselement (20) und mindestens eine elastische Fitting-Metallplatte (10) nach einem der vorhergehenden Ansprüche.

16. Feuerbeständige Wand (60, 61) nach Anspruch 15, wobei die elastische Fitting-Metallplatte (10) dazu angepasst ist, die Teile (3, 4) der Sandwichpaneele (1, 2, X) zusammenzuhalten, oder jedes Sandwichpaneel (1, 2) mit dem Unterstützungselement (20) zu verbinden.

17. Feuerbeständige Wand (60, 61) nach Anspruch 15 oder 16, wobei der Hohlraum (13) über der Sandwichpaneelverbindung (5, 6) eine äußere/externe Oberfläche (7) des ersten Sandwichpaneels (1) und des Unterstützungselements (20) und eine äußere/externe Oberfläche (8) des zweiten Sandwichpaneels (2) und des Unterstützungselements (20) abdeckt.

18. Feuerbeständige Wand (60, 61) nach Anspruch 17, wobei die Abmessung der elastischen Fitting-Metallplatte (10) und ihres Ausdehnungsabschnitts (15) zwischen ihren Enden (11, 12) und ihrem Befestigungsabschnitt (16) an jedem Ende und die Größe der abgedeckten äußeren/externen Oberfläche (7, 8) jedes Sandwichpaneels (1, 2, X) und des Unterstützungselement (20) so vermessen sind, dass ein Raum und Abstand (D) mittels des Hohlraums (13) zwischen der elastischen Fitting-Metallplatte (10) und dem Sandwichpaneel bzw. Sandwichpaneelen (1, 2, X) und/oder dem Unterstützungselement (20) hergestellt werden, wodurch ermöglicht wird, dass die feuerbeständige Wand (60, 61) dynamischen Stoßbelastungen und einem Brand für einen längeren Zeitraum für feuerbeständige Wände (60, 61) bis zu 240 Minuten standhält.

19. Feuerbeständige Wand (60, 61) umfassend Unterstützungselemente (20) zwischen Sandwichpaneelen (1, 2, X) und eine Halterung (70) nach einem der Ansprüche 1 bis 14 zur Befestigung jedes Sandwichpaneels (1, 2) an einem Unterstützungselement (20) und mindestens zwei elastische Fitting-Metallplatten (10), von denen jede elastische Fitting-Metallplatte (10) zum Halten einer Einzelschicht von Sandwichpaneelen (1, 2) nach einem der Ansprüche 1 bis 14 ausgelegt ist, wobei die elastischen Fitting-Metallplatten (10) und Halterungen (70) dazu angepasst sind, an verschiedenen Seiten der feuerbeständigen Wand (60, 61) montiert zu werden, wobei jede elastische Fitting-Metallplatte (10) zum Zusammenhalten der Teile (3, 4) der tatsächlichen Sandwichpaneele (1, 2) als die überlappende Verbindungskupplung an einer Seite der feuerbeständigen Wand (60, 61) angepasst ist, wobei jede elastische Fitting-Metallplatte (10) eine Form aufweist, die einen Hohlraum (13) über der Sandwichpaneelverbindung (5, 6) und der Halterung (70) bildet, die jedes Sandwichpaneel (1, 2) an dem Unterstützungselement (20) an einer Seite der feuerbeständigen Wand (60, 61) befestigt, wobei mindestens eine erste elastische Fitting-Metallplatte (10) und eine Halterung (70) an der Seite der feuerbeständigen Wand (60, 61) angeordnet sind, die direkt einem Brand und dynamischen Stoßbelastungen ausgesetzt ist, und mindestens eine zweite elastische Fitting-Metallplatte (10) und eine Halterung (20) an der gegenüberliegenden Seite der feuerbeständigen Wand (60, 61) angeordnet sind, die nicht direkt dem Brand und den dynamischen Stoßbelastungen ausgesetzt ist, wobei, wenn die erste elastische Fitting-Metallplatte (10) für eine bestimmte Zeitdauer einem Brand ausgesetzt worden ist, diese erste elastische Fitting-Metallplatte (10) aufgrund eines verlängerten Aussetzens gegenüber übermäßiger Hitze an ihrer Seite der Sandwichpaneelwand ihre Festigkeit verliert, nur die zweite elastische Fitting-Metallplatte (10) an der Seite der Sandwichpaneelwand (60, 61), wo weniger Hitze vorhanden ist, in der Lage ist, sich auszudehnen und zurückzuspringen, und dadurch dynamischen Stoßbelastungen standzuhalten, die von der direkt exponierten oder getroffenen Seite der feuerbeständigen Wand (60, 61) auf ihre indirekt getroffene Seite übertragen werden.

## Revendications

1. Plaque métallique d'ajustement élastique (10) et un support (70) utilisés pour maintenir une seule couche de panneaux sandwich (1, 2, X) pour former une paroi ignifuge (60, 61) avec un élément de support (20), la plaque métallique d'ajustement élastique (10) étant conçue pour être fixée avec une première extrémité (11) à une première partie (3) d'un premier panneau sandwich (1) et conçue pour être fixée avec une deuxième extrémité (12) à une première partie (4) d'un deuxième panneau sandwich (2) ou à l'élément de support (20) en tant qu'accouplement en chevauchement d'un joint au niveau d'un côté de la paroi ignifuge (60, 61), la plaque métallique d'ajustement élastique (10) étant conçue pour maintenir ensemble les premières parties (3, 4) des panneaux sandwich (1, 2, X), et le support (70) étant conçu pour fixer chaque panneau sandwich (1, 2, X) à l'élément de support (20) au niveau du joint de panneau sandwich (5, 6), ladite plaque métallique d'ajustement élastique (10) ayant une forme créant une cavité (13) sur un joint de panneau sandwich (5, 6), et ayant une section d'expansion (15) entre ses extrémités (11, 12) et une section de fixation (16) à chaque extrémité (11, 12), chaque section de fixation (16) étant configurée pour être fixée solidement à la première partie (3, 4) d'un panneau sandwich (1, 2, X) ou à l'élément de support (20), et la section d'expansion (15) étant configurée pour permettre un jeu / une plage de mouvement pour la plaque métallique d'ajustement élastique (10) en réponse à des charges d'impact dynamiques en étant apte à être étirée et ensuite à revenir par ressort pendant l'exposition à des charges d'impact dynamiques.

2. Plaque métallique d'ajustement élastique (10) et un support (70) selon la revendication 1, dans lesquels la plaque métallique d'ajustement élastique (10) est un élément allongé ayant une forme de section transversale qui crée une distance entre un plan formé le long de ses extrémités fixées (11, 12) et sa section d'expansion (15).

3. Plaque métallique d'ajustement élastique (10) et un support (70) selon la revendication 1 ou 2, dans lesquels la plaque métallique d'ajustement élastique (10) est un élément allongé ayant une forme de section transversale créant un renflement et / ou une forme arrondie et / ou au moins partiellement en coin / bordée.

4. Plaque métallique d'ajustement élastique (10) et un support (70) selon la revendication 1, 2 ou 3, dans lesquels la plaque métallique d'ajustement élastique (10) est un élément allongé ayant une forme de section transversale créant une forme non plate.

5. Plaque métallique d'ajustement élastique (10) et un support (70) selon l'une quelconque des revendications 1 à 4, dans lesquels la plaque métallique d'ajustement élastique (10) est un élément allongé ayant une forme de section transversale définissant la cavité (13) le long de la longueur de plaque métallique d'ajustement (14).

6. Plaque métallique d'ajustement élastique (10) et un support (70) selon l'une quelconque des revendications 1 à 5, dans lesquels le prolongement des extrémités fixées (11, 12) de la plaque métallique d'ajustement élastique (10) est parallèle à chaque panneau sandwich (1, 2) tandis que le prolongement de la section d'expansion (15) de la plaque métallique d'ajustement élastique (10) entre ses extrémités diverge au moins en partie par rapport au prolongement des extrémités de la plaque métallique d'ajustement élastique (10).

7. Plaque métallique d'ajustement élastique (10) et un support (70) selon l'une quelconque des revendications 1 à 6, dans lesquels la cavité (13) formée par la plaque métallique d'ajustement élastique (10) sur le joint de panneau sandwich (5, 6) est remplie d'un matériau résistant / retardateur / impénétrable à la chaleur/ au feu / aux flammes ou est sans air.

8. Plaque métallique d'ajustement élastique (10) et un support (70) selon l'une quelconque des revendications 1 à 7, dans lesquels la cavité (13) formée par la plaque métallique d'ajustement élastique (10) sur le joint de panneau sandwich (5, 6) est configurée pour atteindre une distance entre l'élément de support (20) dans le joint (5, 6) et le feu / la chaleur / les flammes.

9. Plaque métallique d'ajustement élastique (10) et un support (70) selon l'une quelconque des revendications 1 à 8, dans lesquels la cavité (13) formée par la plaque métallique d'ajustement élastique (10) sur le joint de panneau sandwich (5, 6) est configurée pour couvrir des éléments de support (20) de tailles / formes variables / différentes dans le joint entre les panneaux sandwich (1, 2).

10. Plaque métallique d'ajustement élastique (10) et un support (70) selon l'une quelconque des revendications 1 à 9, dans lesquels la cavité (13) formée par la plaque métallique d'ajustement élastique (10) sur le joint de panneau sandwich (5, 6) est configurée pour couvrir tout élément de support (20) dans le joint (5, 6) entre les panneaux sandwich (1, 2) ayant au moins une dimension inférieure à celle d'un panneau sandwich (1, 2).

11. Plaque métallique d'ajustement élastique (10) et un support (70) selon l'une quelconque des revendications 1 à 10, dans lesquels la cavité (13) formée par la plaque métallique d'ajustement élastique (10) sur le joint de panneau sandwich (5, 6) est configurée pour couvrir tout élément de support (20) dans le joint entre les panneaux sandwich (1, 2) ayant au moins une dimension supérieure à celle d'un panneau sandwich (1, 2).

12. Plaque métallique d'ajustement élastique (10) et un support (70) selon l'une quelconque des revendications 1 à 11, dans lesquels la cavité (13) formée par la plaque métallique d'ajustement élastique (10) sur le joint de panneau sandwich (5, 6) est configurée pour couvrir tout élément de support (20) dans le joint entre les panneaux sandwich (1, 2) ayant au moins une dimension inférieure à celle d'un panneau sandwich (1, 2) et tout élément de support (20) dans le joint (5, 6) entre les panneaux sandwich (1, 2) ayant au moins une dimension supérieure à celle d'un panneau sandwich (1, 2).

13. Plaque métallique d'ajustement élastique (10) et un support (70) selon l'une quelconque des revendications 1 à 12, dans lesquels la forme en coupe transversale de la plaque métallique d'ajustement élastique (10) a au moins en partie une forme gonflée ou ondulée.

14. Plaque métallique d'ajustement élastique (10) et un support (70) selon l'une quelconque des revendications 1 à 13, dans lesquels la plaque métallique d'ajustement élastique (10) a une forme créant la cavité (13) sur le joint de panneau sandwich (5, 6), l'élément de support (20) et le support (70).

15. Paroi ignifuge (60, 61) comprenant des éléments de support (20) entre des panneaux sandwich (1, 2, X) et un support (70) selon l'une quelconque des revendications précédentes pour fixer chaque panneau sandwich (1, 2, X) à un élément de support (20) et au moins une plaque métallique d'ajustement élastique (10) selon l'une quelconque des revendications précédentes.

16. Paroi ignifuge (60, 61) selon la revendication 15, dans laquelle la plaque métallique d'ajustement élastique (10) est adaptée pour maintenir ensemble les parties (3, 4) des panneaux sandwich (1, 2, X) ou pour joindre chaque panneau sandwich (1, 2) à l'élément de support (20).

17. Paroi ignifuge (60, 61) selon la revendication 15 ou 16, dans laquelle la cavité (13) sur le joint de panneau sandwich (5, 6) recouvre une surface extérieure / externe (7) du premier panneau sandwich (1) et de l'élément de support (20) et une surface extérieure / externe (8) du deuxième panneau sandwich (2) et de l'élément de support (20).

18. Paroi ignifuge (60, 61) selon la revendication 17, dans laquelle la dimension de la plaque métallique d'ajustement élastique (10) et sa section d'expansion (15) entre ses extrémités (11, 12) et la section de fixation (16) à chaque extrémité et la taille de la surface extérieure / externe recouverte (7, 8) de chaque panneau sandwich (1, 2, X) et de l'élément de support (20) sont dimensionnées pour créer un espace et une distance (D) au moyen de la cavité (13) entre la plaque métallique d'ajustement élastique (10) et le ou les panneaux sandwich (1, 2, X) et / ou l'élément de support (20) permettant à la paroi ignifuge (60, 61) de résister à des charges d'impact dynamiques et des incendies pendant une période de temps plus longue pour des parois ignifuges (60, 61), jusqu'à 240 minutes.

19. Paroi ignifuge (60, 61) comprenant des éléments de support (20) entre des panneaux sandwich (1, 2, X) et un support (70) selon l'une quelconque des revendications 1 à 14 pour fixer chaque panneau sandwich (1, 2) à un élément de support (20), et au moins deux plaques métalliques d'ajustement élastiques (10) dont chaque plaque métallique d'ajustement élastique (10) est configurée pour maintenir une seule couche de panneaux sandwich (1, 2) selon l'une quelconque des revendications 1 à 14, lesdites plaques métalliques d'ajustement élastiques (10) et lesdits supports (70) sont conçus pour être montés au niveau de différents côtés de la paroi ignifuge (60, 61), chaque plaque métallique d'ajustement élastique (10) est conçue pour maintenir ensemble les parties (3, 4) des panneaux sandwich réels (1, 2) en tant qu'accouplement en chevauchement d'un joint au niveau d'un côté de la paroi ignifuge (60, 61), chaque plaque métallique d'ajustement élastique (10) ayant une forme qui forme une cavité (13) sur le joint de panneau sandwich (5, 6) et le support (70) fixant chaque panneau sandwich (1, 2) à l'élément de support (20) au niveau d'un côté de la paroi ignifuge (60, 61), dans laquelle au moins une première plaque métallique d'ajustement élastique (10) et un support (70) sont disposés au niveau du côté de la paroi ignifuge (60, 61) qui est exposé directement au feu et aux charges d'impact dynamiques, et au moins une deuxième plaque métallique d'ajustement élastique (10) et un support (20) sont disposés au niveau du côté opposé de la paroi ignifuge (60, 61) qui n'est pas directement exposé au feu et aux charges d'impact dynamiques, dans laquelle, lorsque la première plaque métallique d'ajustement élastique (10) a été exposée à un incendie pendant une certaine durée, cette première plaque métallique d'ajustement élastique (10) perd sa résistance en raison d'une exposition prolongée à une chaleur excessive au niveau de son côté de la paroi de panneau sandwich, seule la deuxième plaque métallique d'ajustement élastique (10) sur le côté de la paroi de panneau sandwich (60, 61) où moins de chaleur est présente, est apte à s'étirer et à revenir par ressort et, de ce fait, résister à des charges d'impact dynamiques transférées depuis le côté directement exposé ou frappé de la paroi ignifuge (60, 61) vers son côté d'impact indirect.
